# EUROPÄISCHE PATENTSCHRIFT

(11) **EP 1 698 855 B1**
(45) Veröffentlichungstag und Bekanntmachung des Hinweises auf die Patenterteilung: **07.01.2009**
(21) Anmeldenummer: 06004524.2
(22) Anmeldetag: 06.03.2006
(51) Int. Cl.: G01B 11/27

(54) **Verfahren zum Ausrichten von Maschinen oder Maschinenteilen**
Method for aligning machines or machine parts
Procédé destiné à l'ajustage de machines ou d'éléments de machines

(30) Priorität: 04.03.2005 DE 102005010527
(43) Veröffentlichungstag der Anmeldung: 06.09.2006
(73) Patentinhaber: Prüftechnik Dieter Busch AG, 85737 Ismaning (DE)
(72) Erfinder: Suing, Harald, 82256 Fürstenfeldbruck (DE); Wegener, Martin, 85551 Kirchheim (DE)

(56) Entgegenhaltungen:
- EP-A- 1 589 319
- DE-A1- 10 109 462
- US-A- 6 040 903
- US-A- 6 046 799
- US-B1- 6 515 294

## Beschreibung

Die vorliegende Erfindung betrifft ein Verfahren zum Ausrichten von Maschinen oder Maschinenteilen mittels Lichtstrahlen und optoelektronischen Empfangselementen.

Vorrichtungen und Verfahren der genannten Art haben sich seit etwa 20 Jahren hervorragend bewährt, um ein bequemes und trotzdem sehr präzises Ausrichten von Maschinen oder anderen technischen Gegenständen durchzuführen.

In der US 6,515,294 wird eine solche Vorrichtung zur Ausrichtung insbesondere von Wellen beschrieben, die aus einer Lichtsende- und Empfangsvorrichtung und einem reflektierenden Prisma besteht. Hierbei werden die beiden auszurichtenden Wellen entweder gemeinsam verschwenkt, wobei sowohl die Lichtsende- und Empfangsvorrichtung als auch das reflektierende Prisma fest mit der jeweiligen Welle verbunden sind, oder es wird eine der beiden Wellen gemeinsam mit der Lichtsende- und Empfangsvorrichtung bzw. dem reflektierenden Prisma gedreht, wobei wiederum sowohl die Lichtsende- und Empfangsvorrichtung als auch das reflektierende Prisma fest mit der jeweiligen Welle verbunden sind.

In der US 6,050,903 wird bei einer ähnlichen Vorrichtung das Problem gelöst, dass bei der Vermessung des Ausrichtzustandes zweier Wellen bei Messung unter mehreren Drehwinkeln dieser Wellen der Lichtstrahl die Detektorfläche nicht mehr erreicht. Dieses Problem tritt auf, weil zu Beginn der Messung unter einem bestimmten Drehwinkel der Wellen Detektor und Lichtstrahl so eingerichtet werden, dass der Detektor vom reflektierten Lichtstrahl getroffen wird. Danach werden dann die beiden Wellen gedreht, um Messwerte unter verschiedenen Drehwinkeln aufzunehmen. Da die Wellen aber eine Fehlausrichtung aufweisen, wandert der Auftreffpunkt des Lichtstrahls über die Detektorfläche und u. U. über deren Rand hinaus. Wenn dieser Fall eintritt, wird die Messung unterbrochen und auf einer der beiden Wellen das dort angebrachte Element (die Lichtsende- und Empfangsvorrichtung oder das reflektierende Prisma bzw. Lichtsender oder Detektor) kontrolliert auf dieser Welle verdreht. Danach kann die Messung fortgesetzt werden. Es ist nicht vorgesehen, dass zur Durchführung der Messung selbst das auf einer der Wellen angebrachte Element unabhängig von dem anderen Element und/oder unabhängig von der Welle gedreht wird.

Aufgabe der Erfindung ist es, die vorgenannten Verfahren weiterzubilden, so daß insbesondere die Vielfalt der Anweridungsmöglichkeiten ohne größere zusätzliche Kosten gesteigert werden kann. Insofern ist es ein besonderes Anliegen der Erfindung, ein Verfahren zum verbesserten Ausrichten von Rohren oder Hohlzylindem relativ zueinander zu schaffen. Die Erfindung kann aber insbesondere auch dazu verwendet werden, Spindeln in axialer Richtung relativ zueinander auszurichten, das heißt, den Achsversatz in radialer Richtung (also translatorischer oder Parallelversatz) und den Winkelversatz (also z.B. Versatz in azimutaler und/oder elevationsmäßiger Richtung) auf möglichst geringe Werte einzustellen.

Diese Aufgabe wird gemäß der Erfindung dadurch gelöst, daß eine im Prinzip bekannte Lichtsende-/Empfangseinrichtung koaxial zu einem Rohr oder einer Spindel angebracht und fixiert wird. Gemäß der Erfindung wird nun gegenüber, in Richtung des ausgesendeten Lichtstrahls, ein als Reflektor wirkendes 90 ° - Prisma (gelegentlich auch als Dachkantprisma bezeichnet) angeordnet. Dieses Prisma wird im folgenden als Reflektor-Prisma bezeichnet. Eine solche Kombination ist für die Zwecke der Spindelausrichtung an sich bekannt und unter dem Namen SPINDALIGN erhältlich. Zum Ausrichten von Spindeln gemäß der Spindalign-Vorrichtung ist es jedoch erforderlich, gleichzeitig sowohl die Lichtsende-/Empfanseinrichtung als auch das Reflektor-Prisma im gleichen Drehsinn zu verdrehen. Dies ist umständlich und wenig ergonomisch. Es ist ersichtlich, dass die Anwendung dieses Meßprinzips für die Ausrichtung von Rohren mit noch schlechterer Ergonomie einhergeht. Die Lösung dieses Problems erfolgt nun gemäß der Erfindung dadurch, daß es überraschenderweise lediglich erforderlich ist, bei stationärer und unbewegter Lichtsende-/Empfangseinrichtung nur den anderen Teil der Meßapparatur, also das Reflektor-Prisma, um einen Drehwinkel zu verschwenken, und zwar um eine Drehachse, die dem auszurichtendem Rohr parallel ist. In unterschiedlichen Drehpositionen des Reflektor-Prisma wird dann durch die Lichtsende-/Empfangseinrichtung mittels eines zweidimensional auslesbaren optoelektronischen Detektors ein jeweiliger Auftreffpunkt des reflektierten Laserstrahles gemessen. -. Das Reflektor-Prisma kann im Inneren des Rohres mittels einer Drehvorrichtung verschwenkt werden, oder an das Rohr fixiert sein und zusammen mit diesem um einen definierten Winkel ("phi"), bevorzugt 90°, verschwenkt werden. Es sind zumindest drei Drehstellungen des Reflektor-Prismas zu verwenden, wobei es vorteilhaft ist, dessen jeweilige Drehstellung (=Drehlage) mittels eines Inclinometers zu bestimmen, insbesondere mittels eines elektronisch wirkenden Inklinometers. Überraschenderweise wandert der Lichtpunkt des per Reflektor-Prisma reflektierten Licht- oder Laserstrahls auf dem optoelektronischen Detektor derart, daß bei Rotation des Reflektor-Prismas von nur 90° eine Kreislinien- oder elliptische Ortskurve mit einem Bogen entsprechend 180° gebildet wird, allgemein also eine Verdoppelung des Drehwinkels bewirkt wird. Aus diesem Grund hat die auswertende Software eines erfindungsgemäßen Gerätes diesen Effekt speziell zu berücksichtigen, so daß vorhandene herkömmliche Geräte zwar in lediglich softwaremäßiger Weise angepaßt, aber nicht unmodifiziert verwendet werden können.

Die Erfindung sieht alsofolgendes vor : Ein Verfahren nach Anspruch 1.

Ein Verfahren zum Ausrichten von Maschinen oder Objekten, bei dem eine Vorrichtung der obengenannten Art dazu verwendet wird, die Lage der genannten ersten Referenzachse relativ zur Lage der genannten zweiten Referenzachse nach zwei Winkelkoordinaten des Raumes sowie nach zwei Koordinaten des Parallelversatzes zu bestimmen; und/oder ein Verfahren zum Ausrichten von Maschinen, Maschinenelementen oder dgl, insbesondere von Rohren oder Hohlzylindern, welches in einer von zwei Meßphasen bei fixierter Lichtsende- und Empfangsvorrichtung (20) eine Drehung des Reflektor-Prismas (60) in mindestens 3 beliebig wählbare Drehpositionen samt zugehöriger Datenerfassung vorsieht, und in einer anderen der beiden Meßphasen bei fixiertem Reflektor-Prisma (60) eine Drehung der Lichtsende- und Empfangsvorrichtung (20) in mehr als 2 beliebig wählbare Drehpositionen samt zugehöriger Datenerfassung vorsieht.

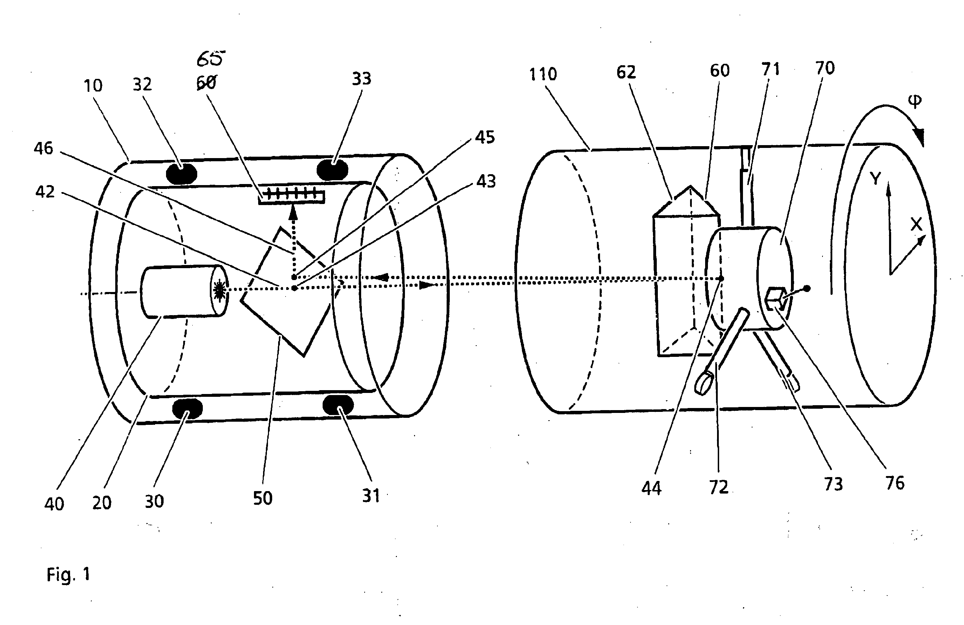

Nähere Einzelheiten werden in den Fig. 1 bis 3 gezeigt.

Ein auszurichtendes Rohr oder Maschinenteil 10 zeigt auf ein auszurichtendes vergleichbares Teil mit der Bezugsziffer 110. Koaxial im inneren des Rohres ist das Gehäuse 20 der Lichtsende-/ Empfangsvorrichtung mittels Distanzvorrichtungen starr befestigt (in der Zeichnung schematisch mit Bezugszeichen 30 - 33 skizziert). Im Inneren des Gehäuses 20 befindet sich ein an sich bekannter Lichtsender 40, dem bevorzugt ein semitransparenter Teilerspiegel 50 vorgeschaltet ist. Auf diese Weise wird ein emittierter Lichtstrahl 42 nur partiell durchgelassen (Durchstoßungspunkt 43). Dieser Lichtstrahl wird durch das im Inneren des Rohres 110 befindliche Reflektor-Prisma 60 an dessen Kathetenflächen in an sich bekannter Weise reflektiert. Im günstigen Fall fällt der Lichtstrahl 42 auf die "Dachkante" des Reflektor-Prisma, beispielsweise auf den Reflektionspunkt 44. - Die Frontfläche 62 des Reflektor-Prismas ist optisch vergütet. - Der Lichtstrahl erreicht dann (Bezugszeichen 46) den zweiachsig auslesbaren optoelektronischen Sensor 65, nachdem er im Reflektionspunkt 45 annähernd rechtwinklig anteilig (bevorzugt 50 % der auftreffenden Intensität) vom als Strahlteiler wirkenden teildurchlässigen Spiegel 50 umgelenkt worden ist.

Sofern das Reflektor-Prisma nicht direkt mit dem Rohr 110 (oder einer vergleichbaren Spindel) um dessen Längsachse verschwenkt wird, kann eine Halterung 70 samt Beabstandungs- oder Verschwenkeinrichtungen 71 - 73 vorgesehen werden, mithilfe derer eine Verdrehung des Reflektor-Prismas 60 möglich ist. Hierzu kann mit Vorteil ein elektromotorischer Antrieb vorgesehen sein. Zur präzisen Bestimmung der Drehlage ist es vorteilhaft, ein elektrisches oder elektronisches Inclinometer 76 zu verwenden, wiewohl dies je nach Genauigkeitsanforderung nicht unbedingt notwendig ist. Zur Verdeutlichung der geometrischen Verhältnisse ist in Fig. 1 die Richtung einer x- und y-Achse angegeben, die zugehörige z-Achse zeigt mithin in Richtung der Längsachse von Rohr oder Gegenstand 110.

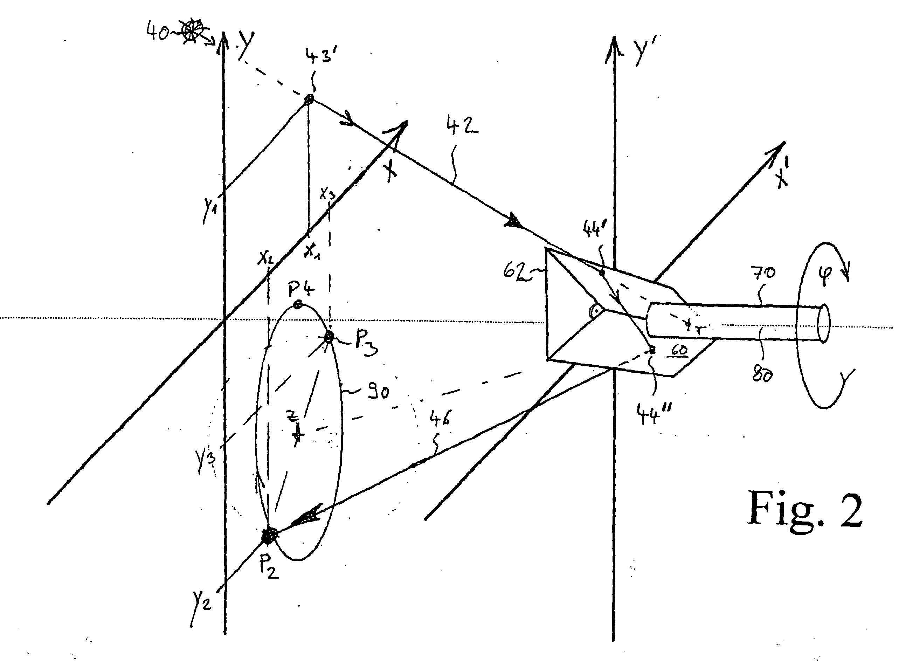

Das zugrundeliegende Prinzip des Meßverfahrens wird in Fig. 2 gezeigt. Aus Gründen der Übersichtlichkeit wird eine schematische Darstellung verwendet, bei der der Strahlteiler 50 entfällt. Vielmehr möge sich die Meßebene des Sensors 65 auf der x-y-Ebene der Fig. 2 befinden. Ein vom Lichtsender 40 emittierter Lichtstrahl 42 möge diese Ebene in Punkt 43' schneiden, welcher die Koordinaten x1 und y1 hat. In der Mehrzahl der Fälle trifft ein solcher Strahl nicht einen auf der Achse 80 liegenden Punkt "T", sondern ist windschief zu dieser Achse gelagert. Je nach Strahllage und Drehstellung des Prismas 60 kommt es zu einer doppelten Umlenkung des Strahls an unterschiedlichen Reflektionspunkten, z.B. in den gezeigten Punkten 44' und 44". Ein solcherart umgelenkter Strahl ist mit Bezugsziffer 46 gekennzeichnet und trifft die x-y-Ebene in Punkt P2 mit den Koordinaten x2 und y2. Nach Drehung des Prismas 60 um den Drehwinkel phi = 90° erreicht der Strahl 46 die x-y-Ebene bzw. eine äquivalente Sensor-Ebene im Punkt P3 mit den Koordinaten x3 und y3, welche den

Durchmesser eines zugehörigen Kreises aufspannen. Dementsprechend hat das Zentrum Z dieses Kreises die Koordinaten (x3+x2)/2 und (y3+y2)/2.

Anhand der 4 Koordinaten für die Punkte P2 und P3 ist es anhand bekannter mathematischer Zusammenhänge möglich, sowohl die achsiale Winkeldifferenz zwischen einfallendem Strahl 42 und Achse 80 nach zwei Raumkoordinaten zu bestimmen, als auch den Parallelversatz, d.h. den Abstand dieser Geraden in der der Frontfläche 62 zugeordneten x'-y' Ebene zu bestimmen, wie es die zugehörige Meßaufgabe erfordert.

In der weiteren Ausführung des Verfahrens der Erfindung werden anstelle einer Schwenkbewegung von 90° mehrere andere mit beliebigen Winkeln durchgeführt. Es wird bevorzugt, in diesem Falle gleichzeitig per Inclinometer 76 die Drehlage des Reflektor-Prismas 60 als Winkelwert zu bestimmen und dem erforderlichen nachgeschalteten Rechengang zuzuführen. Radius und Zentrum des Kreises 90 können im Prinzip durch drei Punkte der Art P2, P3, P4 bestimmt werden. Von Wichtigkeit ist jedoch die Lage des Startpunktes P3, welcher zu einer normierten Start-Drehlage des Reflektor-Prismas 60 (bevorzugt mit horizontal liegender Dachkante d.h. Schnittlinie der durch die Katheten aufgespannten Rechtecke gehört.

In einer weiteren Ausgestaltung der Erfindung wird vorgesehen, nicht nur eine Schwenkbewegung des Reflektor-Prismas 60 samt zugehöriger Registrierung von Positionsdaten von Lichtpunkten auf einem zugeordneten Sensor auszuführen, sondern nachfolgend, gegenenfalls auch vorher, bei nunmehr feststehendem Reflektor-Prisma 60 eine Dreh- bzw. Schwenkbewegung der Lichtsende- und Empfangsvorrichtung auszuführen. Dies kann entweder in z.B. drei bevorzugten Drehlagen vorgenommen werden, die sich auf eine Lotlinie beziehen , oder in drei oder mehr beliebig einstellbaren Drehlagen der Lichtsende-und Empfangsvorrichtung stattfinden. Auch hier ist es von Vorteil, die Winkelstellung solcher Drehlagen mittels eines elektronisch wirkenden Inclinometers zu erfassen und in den gesamten elektronischen Rechengang einer erfindungsgemäßen Meßwerterfässung und - darstellung einfließen zu lassen. Die zuletzt genannte Ausgestaltung der Erfindung knüpft also in entfernter Weise an die Lehre der DE 10109462.0 an.

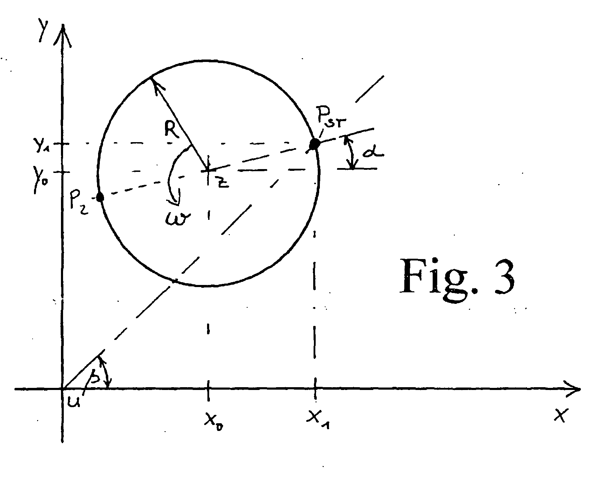

In Fig. 3 wird dargestellt, wie die erforderlichen Meßdaten in unterschiedlicher Weise bereitgestellt werden können. Zum Beispiel können die Auftreffpunkte des Lichtstrahls 46 in den Punkten P st und P 2 bestimmt werden, wobei P st aus einer vordefinierten Start-Drehlage des Reflektor-Prismas resultiert und P 2 aus einer zugehörigen Drehlage des Reflektor-Prismas, welche sich um 90° von dieser vordefinierten Start-Drehlage unterscheidet. Die Koordinaten des Punktes Z können dann offensichtlich als Mittelwerte der x-Koordinaten und der y-Koordinaten der Punkte P st und P 2 bestimmt werden, sofern der obengenannte "weitere Rechengang" nicht ohnehin auf solchen diametral angeordneten Punkt-Koordinaten oder zu diesen gehörenden abgeleiteten, oder ableitbaren, Werten basiert (vgl. Winkelwert "beta" zwischen Ordinate und Gerade durch Ursprung und P st).

Aus Fig. 3 wird ersichtlich, daß der durch die Punkte P st und P 2 gebildete Kreis einen Radius R aufweist. Mit dem Symbol "omega" wird angedeutet, daß die Rotationsgeschwindigkeit eines auf dem entsprechenden Kreis umlaufenden Lichtpunktes das Doppelte der Drehgeschwindigkeit ist, welche das Reflektor-Prisma ausführt.

Das Meßverfahren kann für eine Vielzahl an Ausrichtmaßnahmen im industriellen und architektonischen Umfeld verwendet werden, insbesondere, um zylindrische oder hohlzylindrische Gegenstände relativ zueinander in fluchtender Weise zu justieren.

## Patentansprüche

1. Verfahren zum Ausrichten von Maschinen oder Maschinenelementen (10,110)
mit einer Vorrichtung umfassend eine wahlweise fixierbare oder um ihre Längsachse rotierbare Lichtsende- und Empfangseinrichtung (40), mit welcher eine erste Referenzachse definiert wird, und einem um eine zweite Referenzachse (80) rotierbaren Reflektor-Prisma (60),
um die Lage der ersten Referenzachse relativ zur Lage der zweiten Referenzachse (80) nach zwei Winkelkoordinaten des Raumes sowie nach zwei Koordinaten des Parallelversatzes zu bestimmen,
**dadurch gekennzeichnet, dass**
das Reflektor-Prisma (60) eine optisch vergütete Frontfläche (62) aufweist, und
das Verfahren bei fixierter Lichtsende- und Empfangsvorrichtung (20) eine Drehung des Reflektor-Prismas (60) in mindestens drei beliebig wählbare Drehpositionen samt Messung des Auftreffpunkts des Lichtstrahls (46) auf mindestens einem Empfangsteil (65) der Lichtsende- und Empfangsvorrichtung (40) vorsieht.

## Claims

1. Method for aligning machines or machine elements (10, 110)
having an apparatus comprising a light transmitting and receiving device (40) which can be optionally fixed or rotated about its longitudinal axis and is used to define a first reference axis, and a reflector prism (60) which can be rotated about a second reference axis (80),
in order to determine the position of the first reference axis relative to the position of the second reference axis (80) by two angle coordinates of the space and by two coordinates of the parallel offset,
**characterized in that**
the reflector prism (60) has an optically coated front face (62), and
the method, when the light transmitting and receiving apparatus (20) is fixed, envisages a rotation of the reflector prism (60) into at least three arbitrarily selectable rotational positions including a measurement of the strike point of the light beam (46) on at least one receiving part (65) of the light transmitting and receiving apparatus (40).

## Revendications

1. Procédé pour aligner des machines ou des éléments de machine (10, 110), avec un dispositif comprenant un dispositif émetteur et récepteur de lumière (40) qui peut, au choix, être fixe ou tourner autour de son axe longitudinal et avec lequel est défini un premier axe de référence, et un prisme réflecteur (60) qui peut tourner autour d'un deuxième axe de référence (80) afin de déterminer la position du premier axe de référence par rapport à la position du deuxième axe de référence (80) selon deux coordonnées angulaires de l'espace et selon deux coordonnées du décalage parallèle, **caractérisé en ce que** le prisme réflecteur (60) présente une surface frontale (62) traitée avec une couche optique et le procédé, dans le cas d'un dispositif émetteur et récepteur de lumière fixe (20), prévoit une rotation du prisme réflecteur (60) dans au moins trois positions de rotation pouvant être choisies à volonté ainsi que la mesure du point d'intersection du rayon lumineux (46) sur au moins une partie réceptrice (65) du dispositif émetteur et récepteur de lumière (40).
